# EUROPÄISCHE PATENTSCHRIFT

(11) **EP 2 745 665 B1**
(45) Veröffentlichungstag und Bekanntmachung des Hinweises auf die Patenterteilung: **22.04.2020**
(21) Anmeldenummer: 12199021.2
(22) Anmeldetag: 21.12.2012
(51) Int. Cl.: A01B 45/02, A01B 63/32

(54) **Bodenbearbeitungsvorrichtung zum Bearbeiten von Bodenflächen sowie ein Verfahren zum Bearbeiten von Bodenflächen**
Soil working device for working soil and a method for working soil
Dispositif de traitement de sol destiné à travailler les surfaces de sol ainsi que procédé de traitement de surfaces de sol

(43) Veröffentlichungstag der Anmeldung: 25.06.2014
(73) Patentinhaber: Redexim Handel- en Exploitatie Maatschappij B.V., 3702 AC Zeist (NL)
(72) Erfinder: de Bree, Cornelius Hermanus Maria, 3971 ND Driebergen (NL)
(74) Vertreter: dompatent von Kreisler Selting Werner - Partnerschaft von Patent- und Rechtsanwälten mbB

(56) Entgegenhaltungen:
- EP-A1- 1 210 853
- EP-A1- 2 070 402
- WO-A1-03/096784
- US-A- 4 867 244

## Beschreibung

Die Erfindung betrifft eine Bodenbearbeitungsvorrichtung zum Bearbeiten von Bodenflächen nach dem Oberbegriff des Anspruchs 1, sowie ein Verfahren zum Bearbeiten von Bodenflächen nach dem Oberbegriff des Anspruchs 11.

Es sind Bodenbearbeitungsvorrichtungen aus dem Stand der Technik bekannt, die mindestens eine Stützeinrichtung aufweisen, wie z.B. eine Walze oder Räder, die den Maschinenrahmen auf dem Boden abstützt. Es sind mehrere Stechwerkzeuge vorgesehen, die mit dem Maschinenrahmen gekoppelt sind und relativ zum Maschinenrahmen auf- und abbewegbar sind und dadurch in den Boden einstechbar und wider herausziehbar sind. Ferner ist meist eine Verstelleinrichtung vorgesehen, die den Abstand zwischen der Stützeinrichtung und dem Maschinenrahmen in Höhenrichtung zum Einstellen der Einstechtiefe der Werkzeuge in den Boden einstellt.

Aus der europäischen Offenlegungsschrift EP-A-0037595 ist eine Bodenbearbeitungsvorrichtung bekannt, die zwei parallelogrammartig geführte Tragarme aufweist, die am einen Ende schwenkbar einen Werkzeughalter halten und die am anderen Ende am Maschinenrahmen schwenkbar gelagert sind. Eine Schubstange eines Kurbeltriebes ist an dem Werkzeughalter angelenkt und treibt diesen an, so dass dieser eine Auf- und Abbewegung ausführt. Einer der beiden Tragarme ist längenveränderlich und beinhaltet eine Anschlagfedereinrichtung. Solange sich das Stechwerkzeug außerhalb des Bodens befindet, liegt der Tragarm aufgrund der Federkraft an dem Anschlag an. Bei eingestochenen Stechwerkzeug und Vorwärtsbewegung der Bodenbearbeitungsvorrichtung verschwenkt das Werkzeug mit dem Werkzeughalter entgegen der Fahrtrichtung und der längenveränderliche Tragarm wird gegen die Federkraft verlängert. Eine Bodenbearbeitungsvorrichtung mit den Merkmalen des Oberbegriffs des Anspruchs 1 ist aus der WO 03/096784 bekannt. Aus den EP 2 070 402 A1 und US 4 867 244 A1 sind weitere Vorrichtungen bekannt, welche keine Einstellung der Einstechtiefe zeigen, sonder nur die Möglichkeit, eine Stützeinrichtung von einer Transport- in eine Arbeitsstellung zu bringen.

Es besteht jedoch der Nachteil, dass bei einem unebenen insbesondere hügeligen Untergrund und bei einer geringen Einstechtiefe die Werkzeuge teilweise nicht in Boden einstechen und somit der Boden teilweise nicht bearbeitet werden kann. Aufgabe der vorliegenden Erfindung ist es daher, eine Bodenbearbeitungsvorrichtung und ein Verfahren zum Bearbeiten einer Bodenfläche zu schaffen, bei der bzw. dem der Boden mit Hilfe der Werkzeuge auch bei einer geringen Einstechtiefe bei unterschiedlichen Bodenoberflächen bearbeitet werden kann.

Zur Lösung dieser Aufgabe dienen die Merkmale der Ansprüche 1 und 11.

Die Erfindung sieht in vorteilhafterweise vor, dass die Verstelleinrichtung zusätzlich den Abstand zwischen Stützeinrichtung und Werkzeugen verstellt.

Dies hat den Vorteil, dass abhängig vom Bodenuntergrund der Abstand zwischen Stützeinrichtung und Werkzeugen derart eingestellt werden kann, dass die Werkzeuge auch bei einer geringen Einstechtiefe in den Boden einstechbar sind.

Mittels der Verstelleinrichtung ist beim Vergrößern des Abstandes zwischen Stützeinrichtung und Maschinenrahmen der Abstand zwischen Stützeinrichtung und Werkzeugen verringerbar.

Dies hat insbesondere den Vorteil, dass bei einem großen Abstand zwischen Stützeinrichtung und Maschinenrahmen, d. h. bei einer geringen Einstechtiefe, der Abstand zwischen Stützeinrichtung und Werkzeugen klein sein kann. Dies bedeutet, dass auch bei einem unebenen, insbesondere hügeligen Untergrund, die Stützeinrichtung, auf der der Maschinenrahmen abgestützt ist, dem Untergrund genau folgen kann und die Werkzeuge dadurch, dass ein geringer Abstand zwischen Werkzeugen und Stützeinrichtung besteht, auch bei der geringen Einstechtiefe noch in dem Boden einstechbar sind.

Mittels der Verstelleinrichtung ist beim Verringern des Abstandes zwischen Stützeinrichtung und Maschinenrahmen der Abstand zwischen Stützeinrichtung und Werkzeugen vergrösserbar.

Die Verstelleinrichtung kann hydraulisch, mechanisch oder pneumatisch antreibbar sein.

Die Verstelleinrichtung kann die Stützeinrichtung über ein Getriebe verstellen. Das Getriebe kann einen ersten Schwenkarm aufweisen, wobei die Stützeinrichtung an dem freien Ende des ersten Schwenkarms angeordnet ist und der erste Schwenkarm mittels der Verstelleinrichtung verschwenkbar ist.

Das Getriebe kann einen zweiten Schwenkarm aufweisen, der an einem ersten Ende gelenkig mit der Verstelleinrichtung gekoppelt ist und an einem zweiten Ende mit dem Maschinenrahmen gelenkig gekoppelt ist, wobei der erste Schwenkarm, an dem die Stützeinrichtung angeordnet ist, mit dem zweiten Schwenkarm gelenkig gekoppelt ist. Durch Verschwenken des zweiten Schwenkarms mittels der Verstelleinrichtung wird auch der erste Schwenkarm verschwenkt, wodurch die Stützeinrichtung verstellbar ist.

Durch Verschwenken der Stützeinrichtung kann die Stützeinrichtung gleichzeitig in einer Höhenrichtung und in einer horizontalen Richtung verstellt werden. Die horizontale Richtung verläuft im Wesentlichen parallel zu der Fahrtrichtung. Die Höhenrichtung verläuft im Wesentlichen orthogonal zur Bodenfläche. Durch Verstellen der Stützeinrichtung in Höhenrichtung wird insbesondere der Abstand zwischen Stützeinrichtung und Maschinenrahmen verstellt. Durch Verstellen der Stützrichtung in horizontaler Richtung wird insbesondere der Abstand zwischen Stützeinrichtung und Werkzeugen verstellt.

Die Stützeinrichtung kann mindestens ein Rad, eine Rolle oder eine Walze aufweisen, deren Achse sich in einer Richtung erstreckt, die orthogonal zur Fahrtrichtung und parallel zur zu bearbeitenden Bodenfläche verläuft. Die Länge der Rolle oder Walze in Achsrichtung kann im Wesentlichen so lang sein wie die Bodenbearbeitungsvorrichtung breit ist und die Breite der Bodenbearbeitungsvorrichtung wird in einer Richtung gemessen, die orthogonal zur Fahrtrichtung und im Wesentlichen parallel zur Bodenfläche verläuft.

Die Werkzeuge können in einer Richtung, die orthogonal zur Fahrtrichtung und im Wesentlichen parallel zu bearbeitenden Bodenfläche verläuft, nebeneinander angeordnet sein.

Die Verstelleinrichtung verstellt die Stützeinrichtung zum Verstellen des Abstandes zwischen den Werkzeugen und der Stützeinrichtung in einer Richtung, die im Wesentlichen parallel zur Fahrtrichtung verläuft.

Die Stützeinrichtung kann in Fahrtrichtung vor den Werkzeugen angeordnet sein. Die Verstelleinrichtung kann die Stützeinrichtung beim Vergrößern des Abstandes zwischen Stützeinrichtung und Werkzeugen in Fahrtrichtung verstellen.

Die Verstelleinrichtung kann die Stützeinrichtung beim Verkleinern des Abstandes zwischen Stützeinrichtung und Werkzeugen entgegen der Fahrtrichtung verstellen.

Gemäß der vorliegenden Erfindung ist ferner ein Verfahren zum Bearbeiten einer Bodenfläche bekannt, das die Schritte von Anspruch 11 aufweist.

Es ist in vorteilhafter Weise vorgesehen, dass beim Verstellen des Abstandes zwischen der zumindest einen Stützeinrichtung und dem Maschinenrahmen zugleich der Abstand zwischen der Stützeinrichtung und den Werkzeugen verstellt wird.

Dies hat den Vorteil, dass der Abstand zwischen den Werkzeugen und der Stützeinrichtung abhängig von der Einstechtiefe und dem Bodenuntergrund eingestellt werden kann, so dass sicher gestellt werden kann, dass die Werkzeuge stets in den Boden einstechen.

Beim Vergrößern des Abstandes zwischen der zumindest einen Stützeinrichtung und dem Maschinenrahmen wird der Abstand zwischen der Stützeinrichtung und den Werkzeugen verkleinert und beim Verkleinern des Abstandes zwischen der zumindest einen Stützeinrichtung und dem Maschinenrahmen wird der Abstand zwischen der Stützeinrichtung und den Werkzeugen vergrössert.

Im Folgenden werden unter Bezugnahme auf die Zeichnungen Ausführungsbeispiele der Erfindung näher erläutert.

Es zeigen schematisch:
- Fig. 1: eine Seitenansicht einer Bodenbearbeitungsvorrichtung.
- Fig. 2: eine schematische Seitenansicht des Antriebs,
- Fig. 3: eine schematische Ansicht aus Fig. 2 in einer anderen Stellung,
- Fig. 4: die Bodenbearbeitungsvorrichtung aus Fig. 1 mit Sicht auf die Innenseite des Maschinenrahmens,
- Fig. 5: eine Bodenbearbeitungsvorrichtung aus Figur 4 mit verstelltem Stützelement,
- Fig. 6: eine Seitenansicht auf das Ausführungsbeispiel gemäß Fig. 5 auf die Innenseite des Maschinenrahmens.
- Fig. 7: eine Rückansicht der Bodenbearbeitungsvorrichtung aus Fig. 1.

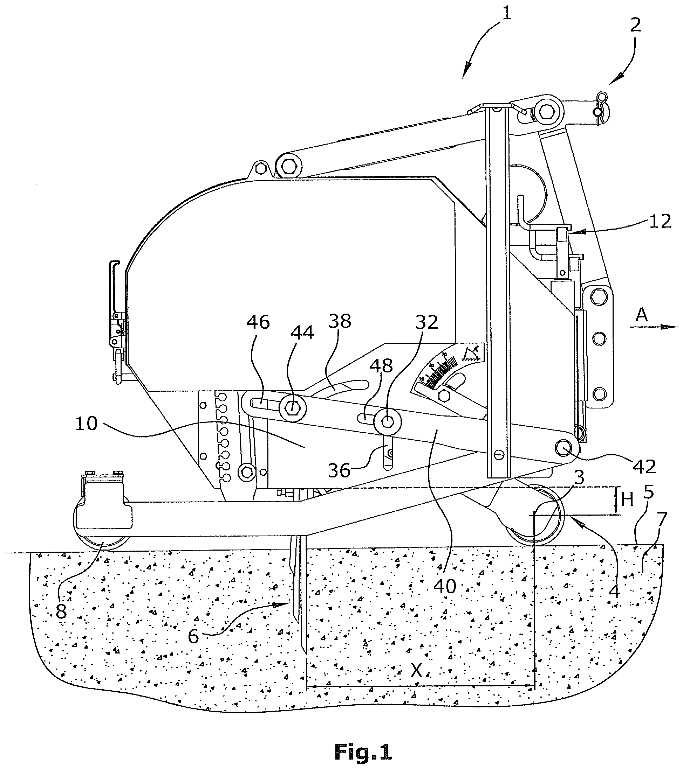

Fig. 1 zeigt die Seitenansicht auf eine Bodenbearbeitungsvorrichtung 1. Die Bodenbearbeitungsvorrichtung 1 weist eine Ankoppeleinrichtung 2 auf, mit der die Bodenbearbeitungsvorrichtung 1 mit einem Zugfahrzeug gekoppelt werden kann und mit dem Zugfahrzeug gezogen werden kann.

Die Bodenbearbeitungsvorrichtung 1 weist einen Maschinenrahmen 10 auf, der über eine Stützeinrichtung 4 auf dem Boden 7 bzw. der Bodenoberfläche 5 abgestützt ist. Die Stützeinrichtung 4 kann zumindest ein Rad, eine Rolle oder eine Walze sein. Bevorzugt ist die Stützeinrichtung 4 eine sich über die Breite der Bodenbearbeitungsvorrichtung 1 erstreckende Rolle oder Walze. Die Bodenbearbeitungsvorrichtung 1 wird in Fahrtrichtung A gezogen. Die Radachse 3 einer als Stützeinrichtung 4 dienenden Rolle oder Walze verläuft im Wesentlichen orthogonal zu der Fahrtrichtung A und parallel zu der Bodenfläche 5.

Mit dem Maschinenrahmen 10 sind Werkzeuge 6 gekoppelt, die in Bezug zu dem Maschinenrahmen 10 auf und abbewegbar und dadurch in den Boden 7 einstechbar und wieder herausziehbar sind. Die Werkzeuge 6 sind Stechwerkzeuge.

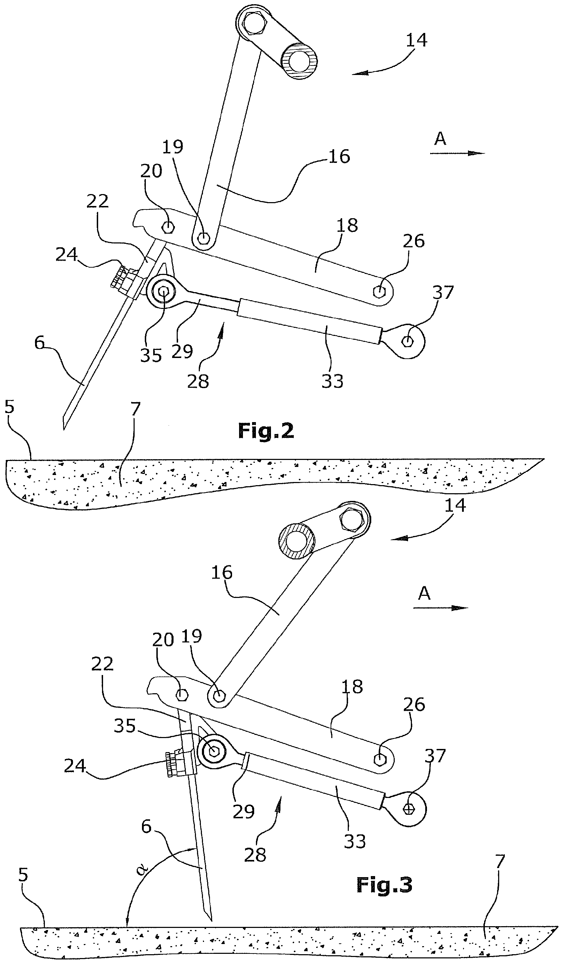

In den Fig. 2 und 3 ist der Antrieb zum Auf- und Abbewegen der Werkzeuge 6 schematisch dargestellt. Die Bodenbearbeitungsvorrichtung 1 weist ein Kurbeltrieb 14 auf, der über eine Schubstange 16 einen Schwenkarm 18 antreibt. Der Schwenkarm 18 ist an einem ersten Ende an dem in Fig. 2 und 3 nicht dargestellten Maschinenrahmen 10 um eine erste Schwenkachse 26 schwenkbar gelagert. Der Schwenkarm 18 kann um die erste Schwenkachse 26 mittels des Kurbeltriebs 14 und der Schubstange 16 verschwenkt werden und dabei eine Auf- und Abbewegung ausführen. Beim Auf- und Abbewegen können die Werkzeuge 6, die Stechwerkzeuge sind, in den Boden 7 eingestochen und wieder herausgezogen werden. An dem dem ersten Ende des Schwenkarms 18 gegenüberliegenden zweiten Ende des Schwenkarms 18 ist ein um eine Schwenkachse 20 gelenkig gelagerter Werkzeughalter 22 angeordnet, der aufgrund der Auf- und Abbewegung des Schwenkarms 18 ebenfalls eine Auf- und Abbewegung ausführt. An dem Werkzeughalter 22 ist zumindest ein Werkzeug 6, vorzugsweise eine Gruppe von Werkzeugen 6, über eine Befestigungseinrichtung 24 mit dem Werkzeughalter 22 verbunden.

Neben dem Schwenkarm 18 ist eine Rückholeinrichtung 28 angeordnet, die einerseits um eine Schwenkachse 37 gelenkig am Maschinenrahmen 10 gelagert ist und andererseits um eine Schwenkachse 35 am Werkzeughalter 22 gelenkig gelagert ist. Die Rückholeinrichtung 28 ist eine Kolbenzylindereinheit. Das Zylinderelement 33 ist mit dem Maschinenrahmen 10 über die Schwenkachse 37 gelenkig verbunden. Die Kolbeneinheit ist eine Kolbenstange 29, die über die Schwenkachse 35 gelenkig mit dem Werkzeughalter 22 verbunden ist. In dem Zylinderelement 33 ist eine Druckfeder angeordnet, die beim teleskopartigen Herausziehen der Kolbenstange 29 aus dem Zylinderelement 33 zusammengedrückt wird und eine Rückstellkraft auf die Kolbenstange 29 und somit auf dem Werkzeughalter 22 ausübt. Im Zylinderelement 33 ist zudem ein Dämpfungselement angeordnet, an das die Kolbenstange 29 anschlägt, nachdem die Kolbenstange 29 wieder zurück in die Ausgangslage in die Zylindereinheit 33 zurückgezogen worden ist.

In Fig. 3 ist das Ausführungsbeispiel aus Fig. 2 kurz vor dem Einstechen des Steckwerkzeuges 6 in den Boden 7 dargestellt. Kurz vor dem Einstechen in den Boden 7 befindet sich das Werkzeug 6 in einer Ausgangslage. In dieser Ausgangslage weist das Werkzeug 6 gegenüber der Bodenfläche 5 ein Einstechwinkel α auf. In dieser Lage liegt die Kolbenstange 29 an dem Dämpfungselement innerhalb des Zylinderelementes 33 an. Beim Einstechen in den Boden 7 wird die Bodenbearbeitungsvorrichtung 1 in Richtung der Fahrtrichtung A weiterbewegt. Dabei wird das Werkzeug 6 um die Schwenkachse 20 entgegen der Rückstellkraft der Rückholeinrichtung 28 verschwenkt. Dabei wird der Boden 7 aufgelockert. Durch den Kurbelantrieb 14 wird das Werkzeug 6 wieder heraufbewegt und dabei wieder aus dem Boden 7 herausgezogen. Nach dem Herausziehen aus dem Boden 7 wird aufgrund der mittels der Rückholeinrichtung 28 auf dem Werkzeughalter 22 und damit auf das Steckwerkzeug 6 wirkende Rückstellkraft das Werkzeug 6 wieder in die Ausgangslage zurückgeschwenkt.

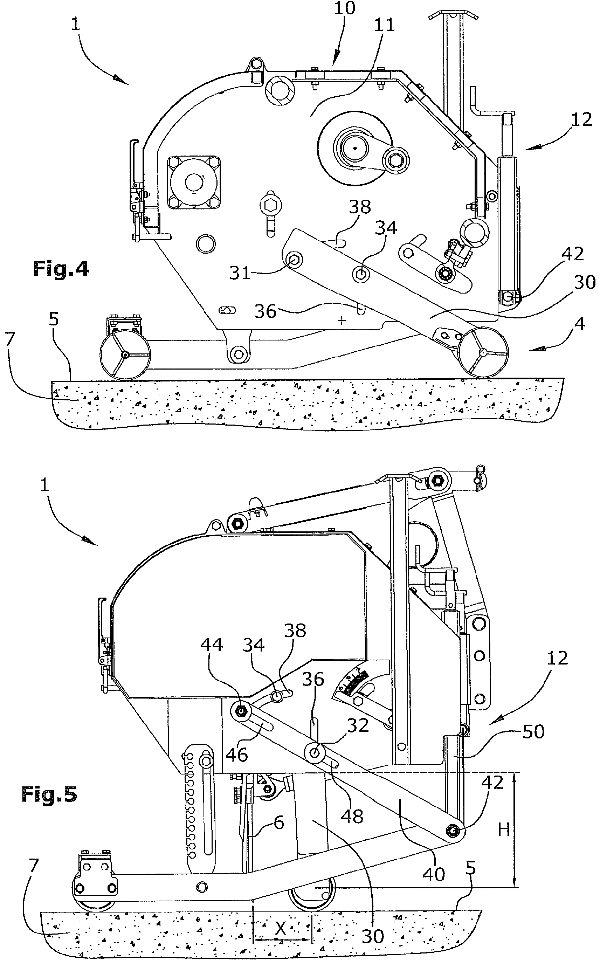

In Fig. 4 ist das Ausführungsbeispiel aus Fig.1 dargestellt, wobei die Ansicht die Innenseite der Seitenwand 11 des Maschinenrahmens 10 darstellt. Daher sind in dieser Ansicht die Stechwerkzeuge 6 nicht dargestellt.

Die Stützeinrichtung wird mittels einer Verstelleinrichtung 12 über ein Getriebe verstellt. Das Getriebe weist einen ersten und einen zweiten Schwenkarm 30, 40 auf. Die Stützeinrichtung 4 ist an zumindest den ersten Schwenkarm 30 angeordnet, der auf der Innenseite der Seitenwand 11 des Maschinenrahmens 10 angeordnet ist und in Bezug zu dem Maschinenrahmen 10 verschwenkbar ist.

Der erste Schwenkarm 30 ist um ein erstes Gelenk 31 und ein zweites Gelenk 34 schwenkbar, wobei die Gelenke 31 und 34 entlang von Langlöchern 38 und 36, die in der Seitenwand 11 des Maschinenrahmens 10 angeordnet sind, führbar sind.

Die Bodenbearbeitungsvorrichtung 1 weist, wie in Fig. 1 dargestellt ist, eine Verstelleinrichtung 12 auf. Die dargestellte Verstelleinrichtung 12 ist eine mechanische Verstelleinrichtung. Die Verstelleinrichtung 12 kann jedoch auch eine pneumatischeoder eine hydraulische Verstelleinrichtung sein. Am unteren Ende der Verstelleinrichtung 12 ist, wie aus Fig. 1 hervorgeht, der zweiter Schwenkarm 40 über ein Gelenk 42 mit der Verstelleinrichtung 12 gekoppelt. Mittels der Verstelleinrichtung 12 kann das Gelenk 42 des zweiten Schwenkarms 40 in Höhenrichtung, d. h. in einer Richtung, die im Wesentlichen orthogonal zur Bodenfläche 5 verläuft, verstellt werden. An dem dem ersten Ende gegenüberliegenden zweiten Ende des zweiten Schwenkarms 40 ist der zweite Schwenkarm 40 gelenkig mit dem Maschinenrahmen 10 über ein Gelenkelement 44 gekoppelt. Der zweite Schwenkarm 40 kann sich aufgrund eines im zweiten Schwenkarm 40 angeordneten Langlochs 46 in Bezug zu dem Gelenkelement 44 bewegen, so dass der zweite Schwenkarm 40 an einem zweiten Ende gelenkig und längenveränderlich mit dem Maschinenrahmen 10 gekoppelt ist.

Der zweite Schwenkarm 40 ist ferner über das Gelenk 32 mit dem zweiten Gelenk 34 des ersten Schwenkarms 30 gekoppelt. Der zweite Schwenkarm 40 kann aufgrund eines in dem zweiten Schwenkarm 40 angeordneten Langlochs 48 in Relation zu dem Gelenk 32 bewegt werden.

Beim Verstellen des Gelenkes 42 des zweiten Schwenkarms 40 mittels der Verstelleinrichtung 12 wird das Gelenk 42 in Richtung Bodenfläche 5 bewegt. Dabei verschwenkt der zweite Schwenkarm 40 um die Achse des Gelenkes 42. Ferner verschwenkt der zweite Schwenkarm um die Achsen der Gelenke 44 und 32. Beim Herabführen des Gelenkes 42 in Richtung Bodenfläche 5 wird der zweite Schwenkarm 40 bewegt, so dass der zweite Schwenkarm 40 und somit die Langlöcher 46 und 48 in Relation zu den Gelenken 44 und 32 bewegt werden. Ferner wird das Gelenk 32 in dem Langloch 36 des Maschinenrahmens 11 in Richtung Bodenfläche 5 geführt. Da das Gelenk 32 des zweiten Schwenkarms 40 und das Gelenk 34 des ersten Schwenkarms 30 miteinander gekoppelt sind, wird auch das Gelenk 34 des ersten Schwenkarms 30 entlang des Langlochs 36 in Richtung Bodenfläche geführt. Durch die Zwangsführung des Gelenkes 31 des ersten Schwenkarms 30 in dem Langloch 38 des Maschinenrahmens 10 verschwenkt dabei der erste Schwenkarm 30 und damit die Stützeinrichtung 4.

Die Stützeinrichtung 4 wird beim Verschwenken einerseits in eine Richtung bewegt, die orthogonal zur der Bodenfläche 5 verläuft und andererseits in einer Richtung bewegt, die parallel zur der Fahrtrichtung verläuft. Die Stützeinrichtung 4 wird somit sowohl in Höhenrichtung als auch in horizontaler Richtung verstellt. Beim Verstellen des Gelenkes 42 in Richtung des Bodens 7 wird der Abstand H zwischen Stützeinrichtung 4 und Maschinenrahmen 10 vergrößert, d. h. die Einstechtiefe wird verkleinert, und der Abstand X zwischen Stützeinrichtung 4 und Werkzeugen 6 wird verkleinert.

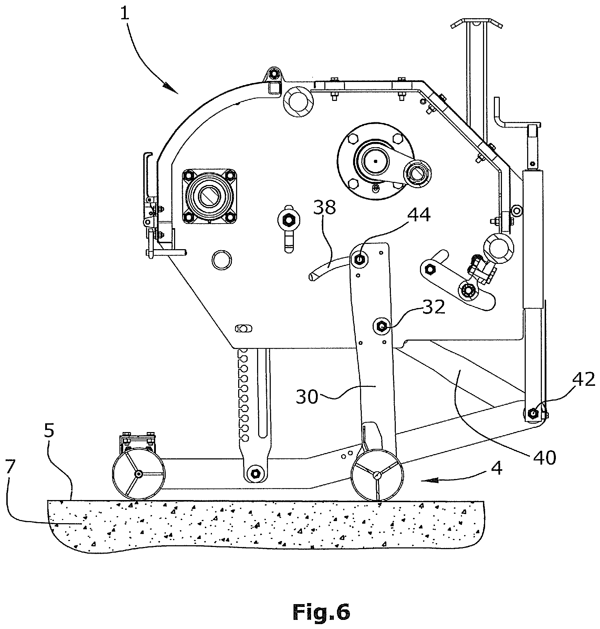

In Fign. 5 und 6 ist eine verschwenkte Stützeinrichtung 4 dargestellt. Die Stützeinrichtung 4 wurde derart verschwenkt, dass sich der Abstand H zwischen der Stützeinrichtung 4 und dem Maschinenrahmen 10 vergrößert und gleichzeitig der Abstand X zwischen Stützeinrichtung 4 und Werkzeugen 6 verkleinert. Bei einem großen Abstand H zwischen Stützeinrichtung 4 und Maschinenrahmen 10 ist die Einstechtiefe der Werkzeuge 6 in den Boden 7 klein. Da die Werkzeuge 6 mit dem Maschinenrahmen 10 gekoppelt sind, wird bei einer Vergrößerung des Abstandes H zwischen Stützeinrichtung 4 und Maschinenrahmen 10 die Einstechtiefe der Werkzeuge 6 in den Boden 7 verkleinert.

Dadurch, dass bei einer geringeren Einstechtiefe der Werkzeuge 6 in den Boden 5 die Stützeinrichtung 4 näher an den Werkzeugen 6 angeordnet ist, können die Werkzeuge 6 auch in dem Boden 7 einstechen, selbst wenn die Bodenfläche 5 uneben oder hügelig ist.

Auf der der Seitenwand 11 gegenüberliegenden Seitenwand 53 des Maschinenrahmens 10 der Bodenbearbeitungsvorrichtung 1 ist ebenfalls ein Getriebe mit ersten und zweiten Schwenkarm 30, 40 sowie Langlöchern 36, 38, 46, 48 und Gelenken 42, 44, 31, 32, 34, 44 und einer weiteren Verstelleinrichtung 12 angeordnet, so dass die über die gesamte Breite der Bodenbearbeitungsvorrichtung 1 sich erstreckende als Walze ausgebildete Stützeinrichtung 4 an beiden Enden gleichmäßig verstellt werden kann.

Die Stützeinrichtung 4 könnte auch auf eine andere Art und Weise verstellt werden, wobei jeweils beim Verstellen des Abstandes H der zwischen der Stützeinrichtung 4 und Maschinenrahmen 10 gleichzeitig oder nacheinander der Abstand X zwischen Stützeinrichtung 4 und Werkzeugen 6 verstellt wird.

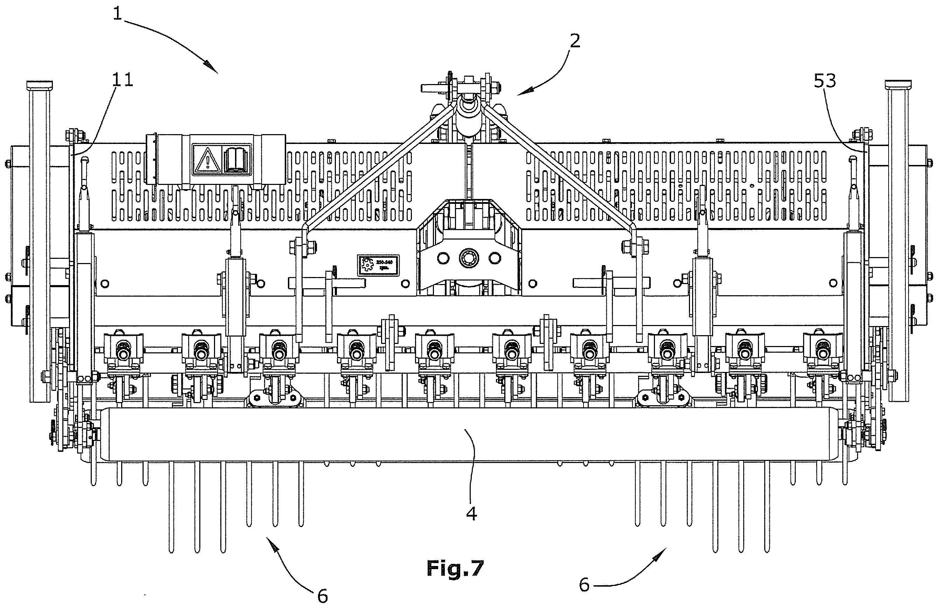

Die Werkzeuge 6 sind vorzugsweise in einer Richtung, die orthogonal zur Fahrtrichtung A und im Wesentlichen parallel zur Bodenfläche 5 verlaufen, nebeneinander angeordnet. Im dargestellten Ausführungsbeispiel ist jeweils eine Gruppe von Werkzeugen 6 an jeweils einem Werkzeughalter 22 angeordnet, der über jeweils eine Schubstange 16, einen Kurbeltrieb 14 und einen Schwenkarm 18 sowie eine Rückstelleinrichtung 28 auf- und abbewegbar ist und dabei im Boden einstechbar und wieder herausziehbar ist, wobei die Werkzeuge 6 innerhalb des Bodens 7 verschwenkbar sind. Die Werkzeuge 6 sind nebeneinander angeordnet und in Fig. 7 näher dargestellt. Ferner geht aus Fig. 7 hervor, dass in Fahrtrichtung A hinter den Werkzeugen 6 eine Walze 8 angeordnet ist, die den mittels der Werkzeuge 6 aufgelockerten Boden glättet. Die Walze 8 ist jedoch kein Element der Stützeinrichtung, sondern ist lediglich über einen Schwenkarm 50 schwenkbar an dem Gelenk 42 der Verstelleinrichtung 12 angeordnet.

## Patentansprüche

1. Bodenbearbeitungsvorrichtung (1) zum Bearbeiten von Bodenflächen (5), insbesondere Rasenflächen, mit
- mindestens einem Maschinenrahmen (10),
- mindestens einer Stützeinrichtung (4), die den Maschinenrahmen (10) auf dem Boden (7) abstützt,
- mehreren Werkzeugen (6), die relativ zum Maschinenrahmen (10) auf- und abbewegbar sind und dadurch in den Boden einstechbar und wieder herausziehbar sind,
- mindestens einer Verstelleinrichtung (12), die den Abstand zwischen Stützeinrichtung (4) und Maschinenrahmen (10) in Höhenrichtung zum Einstellen der Einstechtiefe der Werkzeuge (6) in den Boden einstellt,
**dadurch gekennzeichnet,**
**dass** die Verstelleinrichtung zusätzlich den Abstand zwischen Stützeinrichtung (4) und Werkzeugen (6) verstellt, wobei mittels der Verstelleinrichtung (12) beim Vergrößern des Abstandes (H) zwischen Stützeinrichtung (4) und Maschinenrahmen (10) der Abstand (X) zwischen Stützeinrichtung (4) und Werkzeugen (6) verringerbar ist und wobei mittels der Verstelleinrichtung (12) beim Verringern des Abstandes zwischen Stützeinrichtung (4) und Maschinenrahmen (10) der Abstand zwischen Stützeinrichtung (4) und Werkzeugen (6) vergrößerbar ist, wobei die Verstelleinrichtung die Stützeinrichtung (4) zum Verstellen des Abstandes (X) zwischen Werkzeugen (6) und Stützeinrichtung (4) in einer Richtung verstellt, die im Wesentlichen parallel zur Fahrtrichtung (A) verläuft.

2. Bodenbearbeitungsvorrichtung (1) nach Anspruch 1, **dadurch gekennzeichnet, dass** die Verstelleinrichtung (12) hydraulisch, mechanisch oder pneumatisch antreibbar ist.

3. Bodenbearbeitungsvorrichtung (1) nach Anspruch 1, **dadurch gekennzeichnet, dass** die Verstelleinrichtung (12) die Stützeinrichtung (4) über ein Getriebe verstellt.

4. Bodenbearbeitungsvorrichtung (1) nach Anspruch 3, **dadurch gekennzeichnet, dass** das Getriebe einen ersten Schwenkarm (30) aufweist, wobei die Stützeinrichtung (4) an dem freien Ende des ersten Schwenkarms (30) angeordnet ist und der erste Schwenkarm (30) mittels der Verstelleinrichtung (12) verschwenkbar ist.

5. Bodenbearbeitungsvorrichtung (1) nach Anspruch 4, **dadurch gekennzeichnet, dass** das Getriebe einen zweiten Schwenkarm (40) aufweist, der an einem ersten Ende gelenkig mit der Verstelleinrichtung (12) gekoppelt ist und an dem zweiten Ende mit dem Maschinenrahmen (10) gelenkig gekoppelt ist, wobei der erste Schwenkarm (30), an dem die Stützeinrichtung (4) angeordnet ist, mit dem zweiten Schwenkarm (40) gelenkig gekoppelt ist.

6. Bodenbearbeitungsvorrichtung (1) nach einem der Ansprüche 1 bis 5, **dadurch gekennzeichnet, dass** die mindestens eine Stützeinrichtung (4) mindestens ein Rad, eine Rolle oder eine Walze aufweist, deren Achse sich in einer Richtung erstreckt, die orthogonal zu der Fahrtrichtung (A) und parallel zur zu bearbeitenden Bodenfläche (5) verläuft.

7. Bodenbearbeitungsvorrichtung (1) nach einem der Ansprüche 1 bis 6, **dadurch gekennzeichnet, dass** die Werkzeuge (6) in einer Richtung, die orthogonal zur Fahrtrichtung (A) und parallel zur zu bearbeitenden Bodenfläche (5) verläuft, nebeneinander angeordnet sind.

8. Bodenbearbeitungsvorrichtung (1) nach einem der Ansprüche 1 bis 7, **dadurch gekennzeichnet, dass** die Stützeinrichtung (4) in Fahrtrichtung (A) vor den Werkzeugen (6) angeordnet ist.

9. Bodenbearbeitungsvorrichtung (1) nach Anspruch 8, **dadurch gekennzeichnet, dass** die Verstelleinrichtung (12) die Stützeinrichtung (4) beim Vergrößern der Abstandes (X) zwischen Stützeinrichtung (4) und Werkzeugen (6) in Fahrtrichtung (A) verstellt.

10. Bodenbearbeitungsvorrichtung (1) nach einem der Ansprüche 8 bis 9, **dadurch gekennzeichnet, dass** die Verstelleinrichtung (12) die Stützeinrichtung (4) beim Verkleinern des Abstandes zwischen Stützeinrichtung (4) und Werkzeugen (6) entgegen der Fahrtrichtung (A) verstellt.

11. Verfahren zum Bearbeiten einer Bodenfläche (5) durch
- Ziehen oder Fahren eines auf zumindest einer Stützeinrichtung (4) abgestützten Maschinenrahmens (10) einer Bodenbearbeitungsvorrichtung (1) über eine Bodenfläche (5),
- Einstechen und Herausziehen von mit dem Maschinenrahmen (10) gekoppelten Werkzeugen (6) in die Bodenfläche (5),
- Verstellen des Abstandes (H) zwischen der zumindest einen Stützeinrichtung (4) der Bodenbearbeitungsvorrichtung (1) und dem Maschinenrahmen (10) der Bodenbearbeitungsvorrichtung (1) zum Einstellen der Einstechtiefe der Werkzeuge (6) in den Boden (7),
**dadurch gekennzeichnet,**
**dass** beim Verstellen des Abstandes (H) zwischen der zumindest einen Stützeinrichtung (4) und dem Maschinenrahmen (10) zugleich der Abstand (X) zwischen der Stützeinrichtung (4) und den Werkzeugen (6) verstellt wird, wobei beim Vergrößern des Abstandes (H) zwischen der zumindest einen Stützeinrichtung (4) und dem Maschinenrahmen (10) der Abstand (X) zwischen der Stützeinrichtung (4) und den Werkzeugen (6) verkleinert wird und beim Verkleinern des Abstandes (H) zwischen der zumindest einen Stützeinrichtung (4) und dem Maschinenrahmen (10) der Abstand (X) zwischen der Stützeinrichtung (4) und den Werkzeugen (6) vergrößert wird, wobei die Stützeinrichtung (4) zum Verstellen des Abstandes (X) zwischen Werkzeugen (6) und Stützeinrichtung (4) in einer Richtung verstellt wird, die im Wesentlichen parallel zur Fahrtrichtung verläuft.

## Claims

1. A tilling device (1) for tilling ground surfaces (5), in particular lawn surfaces, comprising
- at least one machine frame (10),
- at least one support means (4) supporting the machine frame (10) on the ground (7),
- a plurality of tools (6) adapted to be moved up and down with respect to the machine frame (10), whereby they are adapted to be pushed into and pulled from the ground,
- at least one adjustment means (12) that adjusts the distance between the support means (4) and the machine frame (10) in the vertical direction in order to adjust the piercing depth of the tools (6) into the ground,
**characterized in that**
the adjustment means also adjusts the distance between the support means (4) and the tools (6), wherein the distance (X) between the support means (4) and the tools (6) can be reduced by the adjustment means (12) as the distance (H) between the support means (4) and the machine frame (10) is increased, and wherein the distance (X) between the support means (4) and the tools (6) can be increased by the adjustment means (12) as the distance (H) between the support means (4) and the machine frame (10) is reduced, wherein for an adjustment of the distance (X) between the tools (6) and the support means (4), the adjustment means adjusts the support means (4) in a direction that is substantially parallel to the traveling direction (A).

2. The tilling device (1) of claim 1, **characterized in that** the adjustment means (12) can be driven hydraulically, mechanically or pneumatically.

3. The tilling device (1) of claim 1, **characterized in that** the adjustment means (12) adjusts the support means (4) by means of a linkage.

4. The tilling device (1) of claim 3, **characterized in that** the linkage comprises a first pivot arm (30), the support means (4) being arranged at the free end of the first pivot arm (30), and the first pivot arm (30) being pivotable by means of the adjustment means (12).

5. The tilling device (1) of claim 4, **characterized in that** the linkage comprises a second pivot arm (40) having a first end hingedly coupled with the adjustment means (12) and a second end hingedly coupled with the machine frame (10), wherein the first pivot arm (30), at which the support means (4) is arranged, is hingedly coupled with the second pivot arm (40).

6. The tilling device (1) of one of claims 1 to 5, **characterized in that** the at least one support means (4) comprises at least one wheel, one roller or one roll, the axis of which extends in a direction that is orthogonal to the traveling direction (A) and parallel to the ground surface (5) to be worked.

7. The tilling device (1) of one of claims 1 to 6, **characterized in that** the tools (6) are arranged side by side in a direction that is orthogonal to the traveling direction (A) and parallel to the ground surface (5) to be worked.

8. The tilling device (1) of one of claims 1 to 7, **characterized in that** the support means (4) is arranged in front of the tools (6), seen in the traveling direction (A).

9. The tilling device (1) of claim 8, **characterized in that** the adjustment means (12) adjusts the support means (4) in the traveling direction (A) as the distance (X) between the support means (4) and the tools (6) is increased.

10. The tilling device (1) of one of claims 8 to 9, **characterized in that** the adjustment means (12) adjusts the support means (4) opposite to the traveling direction (A) as the distance between the support means (4) and the tools (6) is reduced.

11. A method for tilling a ground surface (5) by
- pulling or driving a machine frame (10) of a tilling device (1) over a ground surface (5), the machine frame being supported on at least one support means (4),
- pushing and pulling tools (6) into and from the ground surface (5), the tools being coupled with the machine frame (10),
- adjusting the distance (H) between the at least one support means (4) of the tilling device (1) and the machine frame (10) of the tilling device (1) in order to adjust the piercing depth of the tools (6) into the ground (7),
**characterized in that**
when the distance (H) between the at least one support means (4) and the machine frame (10) is adjusted, the distance (X) between the support means (4) and the tools (6) is adjusted at the same time, wherein when the distance (H) between the at least one support means (4) and the machine frame (10) is increased, the distance (X) between the support means (4) and the tools (6) is reduced, and when the distance (H) between the at least one support means (4) and the machine frame (10) is reduced, the distance (X) between the support means (4) and the tools (6) is increased, wherein for an adjustment of the distance (X) between the tools (6) and the support means (4), the support means (4) is adjusted in a direction that is substantially parallel to the traveling direction (A).

## Revendications

1. Dispositif de travail de sol (1) destiné à travailler des surfaces de sol (5), en particulier des surfaces de pelouse, ledit dispositif comprenant
- au moins un châssis de machine (10),
- au moins un moyen de support (4) qui supporte le châssis de machine (10) sur le sol (7),
- une pluralité d'outils (6) qui peuvent être déplacés vers le haut et vers le bas par rapport au châssis de machine (10) et qui peuvent ainsi être insérés dans le sol et retirés de celui-ci,
- au moins un moyen de réglage (12) qui règle la distance entre le moyen de support (4) et le châssis de machine (10) dans le sens de la hauteur pour régler la profondeur d'insertion des outils (6) dans le sol,
**caractérisé en ce que**
le moyen de réglage règle en outre la distance entre le moyen de support (4) et les outils (6), la distance (X) entre le moyen de support (4) et les outils (6) pouvant être réduite à l'aide du moyen de réglage (12) lors de l'augmentation de la distance (H) entre le moyen de support (4) et le châssis de machine (10) et la distance entre le moyen de support (4) et les outils (6) pouvant être augmentée à l'aide du moyen de réglage (12) lors de la réduction de la distance entre le moyen de support (4) et le châssis de machine (10), le moyen de réglage réglant le moyen de support (4) pour régler la distance (X) entre les outils (6) et le moyen de support (4) dans un sens qui est sensiblement parallèle au sens de déplacement (A).

2. Dispositif de travail de sol (1) selon la revendication 1, **caractérisé en ce que** le moyen de réglage (12) peut être entraîné hydrauliquement, mécaniquement ou pneumatiquement.

3. Dispositif de travail de sol (1) selon la revendication 1, **caractérisé en ce que** le dispositif de réglage (12) règle le moyen de support (4) par le biais d'une transmission.

4. Dispositif de travail de sol (1) selon la revendication 3, **caractérisé en ce que** la transmission comporte un premier bras pivotant (30), le moyen de support (4) étant disposé à l'extrémité libre du premier bras pivotant (30) et le premier bras pivotant (30) pouvant pivoter à l'aide du moyen de réglage (12).

5. Dispositif de travail de sol (1) selon la revendication 4, **caractérisé en ce que** la transmission comporte un deuxième bras pivotant (40) qui est accouplé, à une première extrémité, au moyen de réglage (12) et qui est accouplé de manière articulée, à la deuxième extrémité, au châssis de machine (10), le premier bras pivotant (30) sur lequel est disposé le moyen de support (4) étant accouplé de manière articulée au deuxième bras pivotant (40).

6. Dispositif de travail de sol (1) selon l'une des revendications 1 à 5, **caractérisé en ce que** l'au moins un moyen de support (4) comporte au moins une roue, un galet ou un rouleau dont l'axe s'étend orthogonalement au sens de déplacement (A) et parallèlement à la surface de sol (5) à travailler.

7. Dispositif de travail de sol (1) selon l'une des revendications 1 à 6, **caractérisé en ce que** les outils (6) sont disposés les uns à côté des autres orthogonalement au sens de déplacement (A) et parallèlement à la surface de sol (5) à travailler.

8. Dispositif de travail de sol (1) selon l'une des revendications 1 à 7, **caractérisé en ce que** le moyen de support (4) est disposé en avant des outils (6) par référence au sens de déplacement (A).

9. Dispositif de travail de sol (1) selon la revendication 8, **caractérisé en ce que** le moyen de réglage (12) règle le moyen de support (4) lors de l'augmentation de la distance (X) entre le moyen de support (4) et les outils (6) dans le sens de déplacement (A) .

10. Dispositif de travail de sol (1) selon l'une des revendications 8 à 9, **caractérisé en ce que** le moyen de réglage (12) règle le moyen de support (4) lors de la réduction de la distance entre le moyen de support (4) et les outils (6) dans le sens opposé au sens de déplacement (A) .

11. Procédé de travail d'une surface de sol (5), le procédé comprenant les étapes suivantes
- tirer ou déplacer un châssis de machine (10) d'un dispositif de travail de sol (1), supporté par au moins un moyen de support (4), sur une surface de sol (5),
- insérer des outils (6), accouplés au châssis de machine (10), dans la surface de sol (5) et les retirer de celle-ci,
- régler la distance (H) entre l'au moins un moyen de support (4) du dispositif de travail de sol (1) et le châssis de machine (10) du dispositif de travail de sol (1) pour régler la profondeur d'insertion des outils (6) dans le sol (7),
**caractérisé en ce que**
la distance (X) entre le moyen de support (4) et les outils (6) est également réglée lors du réglage de la distance (H) entre l'au moins un moyen de support (4) et le châssis de machine (10), la distance (X) entre le moyen de support (4) et les outils (6) étant réduite lors de l'augmentation de la distance (H) entre l'au moins un moyen de support (4) et le châssis de machine (10) et la distance (X) entre le moyen de support (4) et les outils (6) étant augmentée lors de la réduction de la distance (H) entre l'au moins un moyen de support (4) et le châssis de machine (10), le moyen de support (4) étant réglé dans un sens sensiblement parallèle au sens de déplacement pour régler la distance (X) entre les outils (6) et le moyen de support (4).
